# EUROPEAN PATENT SPECIFICATION

(11) **EP 2 993 063 B1**
(45) Date of publication and mention of the grant of the patent: **22.08.2018**
(21) Application number: 14791112.7
(22) Date of filing: 02.04.2014
(51) Int. Cl.: B60C 5/00, B60C 19/00

(54) **PNEUMATIC TIRE**
LUFTREIFEN
PNEU

(30) Priority: 01.05.2013 JP 2013096264
(43) Date of publication of application: 09.03.2016
(73) Proprietor: Bridgestone Corporation, Tokyo 104-8340 (JP)
(72) Inventor: WATANABE, Toshiyuki, Kodaira-shi Tokyo 187-8531 (JP)
(74) Representative: Oxley, Robin John George
(86) International application number: PCT/JP2014/001921
(87) International publication number: WO 2014/178167

(56) References cited:
- WO-A1-2012/164960
- JP-A- 2004 082 387
- JP-A- 2012 250 635
- JP-A- 2012 254 655
- JP-A- 2012 254 742

## Description

### TECHNICAL FIELD

The present invention relates to a pneumatic tire having short fibers fixedly attached to at least a portion of an inner surface thereof.

### BACKGROUND ART

It is known that a cavity resonance phenomenon occurs in a pneumatic tire due to a structure thereof, i.e. a hollow annular tube inside the tire, and cavity resonance noise resulting from the phenomenon is indeed a factor which causes unpleasant vehicle interior noise. A pneumatic tire having numberless short fibers fixedly attached to an inner surface thereof has been proposed in PTL 1, for example, in order to reduce the cavity resonance noise.

JP 2012 254 742, JP 2012 254 655, WO 2012/164960 and JP 2004 082 387 disclose known tires comprising fibers on an inside of the tire according to the preamble of claim 1.

### CITATION LIST

### Patent Literature

PTL 1: JP 2004-082387 Laid-Open

### SUMMARY

Specific conditions necessary for enhancing a noise-absorbing effect by short fibers, however, were not clearly known and specific characteristics such as type of material, cross sectional area, length, density, and the like of short fibers had to be determined by trial and error, respectively, in actual applications. This trial-and-error approach makes it difficult to reliably optimize the conditions and does not guarantee that a tire having a good noise-absorbing effect can always be obtained.

In general, attempts to enhance a noise-absorbing effect in a tire have been made by increasing an amount of short fibers fixedly attached to the inner surface of the tire. These attempts, however, increase the weight of the tire and may adversely affect performances such as rolling resistance of the tire.

The present disclosure of our pneumatic tire aims at effectively solving the aforementioned problems of the conventional pneumatic tire having short fibers fixedly attached to at least a portion of an inner surface thereof, and an object thereof is to provide a pneumatic tire capable of effectively enhancing a noise-absorbing effect thereof, while well suppressing an increase in weight of the tire.

According to the present invention there is provided a pneumatic tire as claimed in Claim 1.

The inventors of our pneumatic tire, as a result of a keenly study to solve the aforementioned problems, discovered that a noise-absorbing effect of a tire caused by short fibers is significantly influenced by i) a ratio of a cross sectional area occupied by the short fibers with respect to the total area of a region where the short fibers have been fixedly attached in the inner surface of the tire, in other words, ii) a proportion of a cross sectional area occupied by the short fibers in a unit area, of a region where the short fibers have been fixedly attached, in the inner surface of the tire, or iii) the product of the average cross sectional area of one short fiber multiplied by the number of the short fibers in a unit area, of a region where the short fibers have been fixedly attached, in the inner surface of the tire.

Our pneumatic tire, contrived based on the discoveries described above, is a pneumatic tire having short fibers fixedly attached to at least a portion of an inner surface thereof, wherein: provided that the average cross sectional area of a cross section, not in contact with the inner surface of the tire, of one short fiber is "A" (mm²/the number of short fibers) and the number of the short fibers fixedly attached in a unit area (1 mm²), of a region where the short fibers have been fixedly attached, in the inner surface of the tire is "N" (the number of short fibers/mm²), a value of A × N is in the range of 0.02 to 0.06.
This pneumatic tire can effectively enhance a noise-absorbing effect thereof, while well suppressing an increase in weight of the tire.

The average length of the short fibers is preferably in the range of 0.5 mm to 10 mm in our pneumatic tire.
A noise-absorbing effect of the tire can be further enhanced by this structure.

Values of A, N or the like described above are to be measured in a tire assembled with a prescribed rim and inflated at the prescribed internal pressure with no load exerted thereon in the context of the present specification.
In the present disclosure, a "prescribed rim" represents a standard (or "approved" or "recommended") rim prescribed for each tire size by an industrial standard which is valid in an area where the tire is manufactured and used, and examples of the industrial standard include: "Year Book" of "THE TIRE AND RIM ASSOCIATION INC." of the United States; "STANDARDS MANUAL" of "The European Tyre and Rim Technical Organisation" of Europe; and "JATMA YEAR BOOK" of "The Japan Automobile Tyre Manufacturers Association, Inc." of Japan. "Normal internal pressure" represents internal air pressure prescribed to correspond to the maximum loading capacity of a tire by these industrial standards. "The maximum loading capacity" represents the maximum mass which is permitted to be loaded on a tire by these industrial standards.
In the present specification, "the average cross sectional area" and "the average length" of short fibers represent the average values of cross sectional area and length per short fiber, each obtained as the average value of cross sectional areas/lengths of a plurality of short fibers.
Further, a "cross sectional area of a cross section, not in contact with the inner surface of the tire, of one short fiber" represents a cross sectional area of a cross section, orthogonal to the fiber longitudinal direction, of the short fiber. In a case where a cross sectional area of the cross section changes within one short fiber, the largest cross sectional area of the cross section is regarded as the cross sectional area of the short fiber. Yet further, a "length" of a short fiber does not include a portion thereof embedded inside the inner surface of the tire but represents a length thereof exposed to an air chamber of the tire.

According to our pneumatic tire, it is possible to effectively enhance a noise-absorbing effect of the tire, while suppressing an increase in weight of the tire.

### BRIEF DESCRIPTION OF THE DRAWINGS

In the accompanying drawings, wherein:
FIG. 1 is a cross sectional view in the tire width direction of a pneumatic tire according to one embodiment of our pneumatic tire in a state where the tire has been assembled with a prescribed rim and inflated at predetermined internal pressure with no load exerted thereon;
FIG. 2 is a cross sectional view in the tire width direction of a pneumatic tire according to another embodiment of our pneumatic tire, shown under the same conditions as FIG. 1; and
FIG. 3 is a graph showing a relationship between (A × N) value and noise-absorption rate.

### DETAILED DESCRIPTION

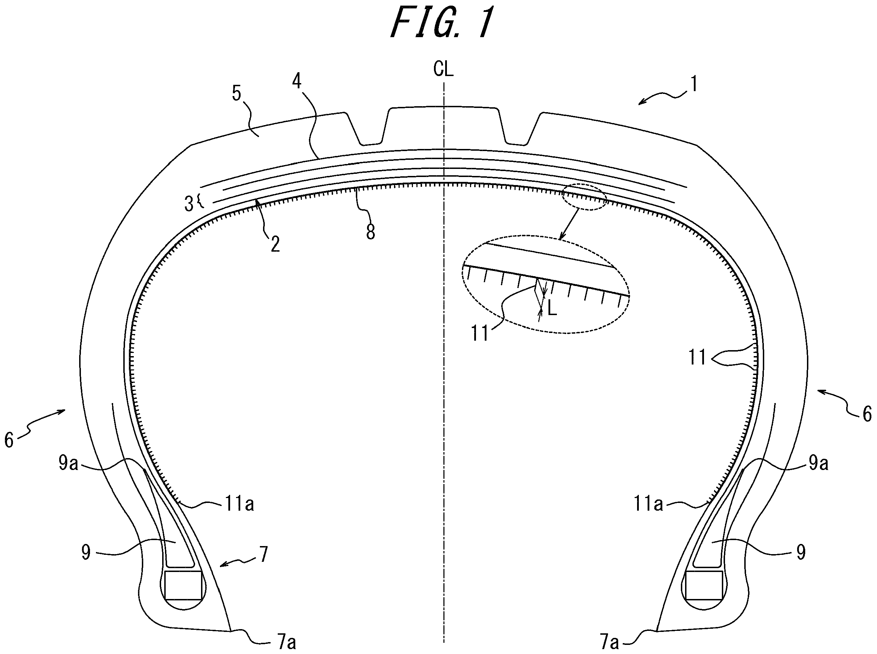

An embodiment of our pneumatic tire will be demonstratively described hereinafter with reference to the drawings.
It should be noted that the drawings and descriptions below do not restrict by any means structures of respective portions of the pneumatic tire.
A pneumatic tire 1 according to one embodiment of our pneumatic tire (which tire may occasionally be referred to simply as a "tire" hereinafter) exemplarily shown in FIG. 1 has: a carcass 2 formed by at least one carcass ply constituted of cords disposed in the tire radial direction across a pair of bead portions 7; an inclined belt layer 3 (two belt layers in the example shown in FIG. 1) provided on the outer peripheral side of a crown region of the carcass 2 and constituted of a belt ply made of metal cords extending to be inclined with respect to the tire circumferential direction; a belt reinforcing layer 4 (a single reinforcing layer in the example shown in FIG. 1) provided on the outer peripheral side of the inclined belt layer 3 and constituted as a reinforcing layer made of organic fiber cords extending in the tire circumferential direction; a tread 5 provided on the outer peripheral side of the belt reinforcing layer 4 to form a ground contact surface of the tire; and a pair of sidewall portions 6 extending from the bead portions 7 toward the outer side in the tire radial direction, respectively.

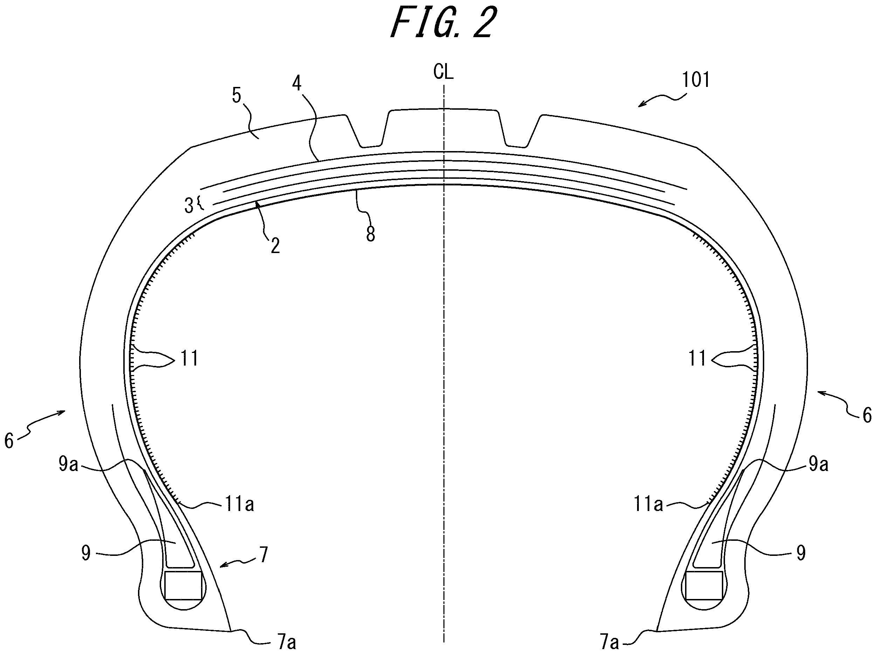

In the tire shown in FIG. 1, respective boundaries 11a, in a tire cross section in the width direction, of a region where the short fibers 11 have been fixedly attached are each set at a position on the outer side in the tire radial direction by a certain distance from each bead toe 7a and on the inner side in the tire radial direction than the upper end (the tire radial direction outermost end) 9a of each bead filler 9, so that numberless short fibers 11 are fixedly attached across the entire periphery of an inner surface 8 of the tire between the respective boundaries 11a. The short fibers 11 thus provided can reduce cavity resonance noise generated by the pneumatic tire 1.
In this connection, fixedly attaching short fibers to at least a portion of the inner surface 8 of the tire suffices for the purpose. For example, the short fibers 11 may be provided only at the inner peripheral surfaces of the sidewall portions 6, as in another embodiment shown in FIG. 2 described below.
The short fibers 11 may be fixedly attached to the inner surface 8 of the tire by, e.g. an urethane-based adhesive. Alternatively, commercially available adhesives of other types or the like may be used as the adhesieve.

Provided that the average cross sectional area of a cross section, not in contact with the inner surface 8 of the tire, of one short fiber 11 is "A" (mm²/the number of short fibers) and the number of the short fibers 11 fixedly attached in a unit area (1 mm²), of a region where the short fibers 11 have been fixedly attached, in the inner surface 8 of the tire is "N" (the number of short fibers/mm²), a value of (A × N) is to be in the range of 0.02 to 0.06 in the tire 1 as our pneumatic tire.
It is possible to effectively enhance a noise-absorbing effect by the short fibers 11, while well suppressing an increase in weight of the tire, by setting the value of (A × N) indicating a proportion of a cross sectional area occupied by the short fibers in a unit area, of a region where the short fibers 11 have been fixedly attached, in the inner surface 8 of the tire to be in the range of 0.02 to 0.06.
More specifically, (A × N) < 0.02 may result in a rapid deterioration of the noise-absorbing effect of the tire. (A × N) > 0.06 rather deteriorates the noise-absorbing effect of the tire and inevitably increases the tire weight, possibly causing an adverse effect on performances such as rolling resistance of the tire. The value of (A × N) is more preferably in the range of 0.03 to 0.05 for the same reasons as described above.

The average length L of the short fibers 11 is preferably in the range of 0.5 mm to 10 mm in our pneumatic tire in terms of further enhancing the noise-absorbing effect of the tire.
Specifically, L < 0.5 mm may diminish the noise-absorbing effect of the tire. L > 10 mm may facilitate entanglement of the short fibers with each other to form pills thereof, possibly preventing the short fibers to cause a noise-absorbing effect in a satisfactory manner. The value of L is more preferably in the range of 2 mm to 8 mm, in this regard.

FIG. 2 shows a tire 101 according to another embodiment of our pneumatic tire. The short fibers 11 are provided not in the vicinity of the tire equatorial plane CL but only at the inner peripheral surfaces of the sidewall portions 6 in the tire 101. The tire 101 shares the same structures as the tire 1 shown in FIG. 1 in other structural details. The tire 101 shown in FIG. 2 can prevent, at the time of a puncture repair operation, a situation in which puncture repair liquid is absorbed by the short fibers 11 and the repair operation is disturbed. Further, if the adhesive attaching the short fibers 11 to the inner surface 8 of the tire comes off from the tire inner surface 8, the coming off of the adhesive and the short fibers on one side of the tire do not spread over the entire inner surface of the tire because the short fibers are implanted in a plurality of regions separate from each other, thereby successfully maintaining a good noise-absorbing effect by the short fibers in a reliable manner, in this case.
It is preferable that the short fibers are fixedly attached to at least 25 % of the total area of the inner surface 8 of the tire in terms of reliably reducing cavity resonance noise generated by the tire and enhancing the noise-absorbing effect by the short fibers.

It is preferable in the tire 1 or the tire 101 described above that the short fibers are fixedly attached to a region in the inner surface 8 of the tire at the average density of ≥ 100 short fibers/cm² in terms of reliably reducing cavity resonance noise generated by the tire and enhancing the noise-absorbing effect by the short fibers.

Short fibers having the average diameter D in the range of 1 µm to 500 µm are preferably used as the short fibers 11.
Specifically, D < 1 µm facilitates frequent thread breakage in the production process of short fibers and decreases the productivity thereof. D > 500 µm increases weight and thus rolling resistance of the tire, thereby possibly deteriorating a fuel consumption rate of a vehicle on which the tire is mounted.

Organic synthetic fibers, inorganic fibers, regenerated fibers, natural fibers and the like can be used as the short fibers 11.
Examples of the organic synthetic fibers which can be used as the short fibers include: polyolefin such as polyethylene, polypropylene, polybutylene; aliphatic polyamide; aromatic polyamide; polyester such as polyethylene terephthalate, polyethylene naphthalate, polyethylene succinate, polymethylmethacrylate; syndiotactic 1,2-polybutadiene; acrylonitrile-butadiene-styrene copolymer; polystyrene; copolymers of these examples; and the like. These organic synthetic fibers, which are generally inexpensive, chemically stable and exhibit good affinity with a urethane-based adhesive, are suitably used for our pneumatic tire.
Examples of the inorganic fibers include fibers of carbon, glass fiber, and the like. Examples of the regenerated fibers include rayon, cupra, and the like. Examples of the natural fibers include cotton, silk, wool, and the like.

### EXAMPLES

It was analyzed by simulation how a change in the value of (A × N) affects the noise-absorbing effect.

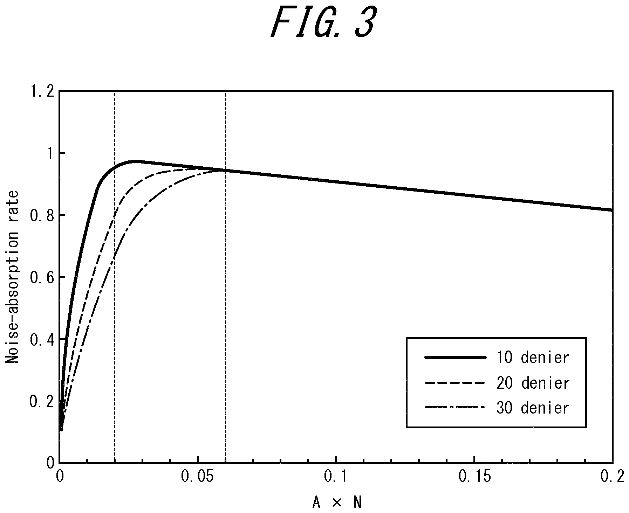

The preconditions for the simulation include that: each short fiber is fixedly attached to a surface and extends like a column normal to the surface without changing a cross sectional shape thereof; and the tire generates cavity resonance noise of 225 Hz (cavity resonance noise of a tire is generally in the range of 200 Hz to 250 Hz). Provided that the average cross sectional area of one short fiber is "A" (mm²/the number of short fibers) and the number of the short fibers fixedly attached in a unit area (1 mm²) of a region where the short fibers have been fixedly attached is "N" (the number of short fibers/mm²), the product (A × N) was changed for each of the three cases: i) the average diameter D of the short fiber was 35 µm (10 denier); ii) the average diameter D of the short fiber was 50 µm (20 denier); and iii) the average diameter D of the short fiber was 60 µm (30 denier) for simulation, so that a noise-absorption rate representing a noise-absorbing effect was obtained for each of the three cases. The results are shown in FIG. 3.
A "noise-absorption rate" represents a ratio of the amount of energy of sound incident on a surface having short fibers fixedly attached thereon and not reflected from the surface, with respect to the amount of energy of the sound incident on the surface.
Each short fiber had a length of 4 mm in each of the aforementioned three cases.
In this connection, it has been found out that the type of material of the short fibers makes substantially no influence on the noise-absorption rate.

It has been revealed from the simulation results shown in Table 3 that (A × N) ≥ 0.02 ensures a good noise-absorbing effect. It has also been revealed that the noise-absorbing effect rapidly diminishes when (A × N) is < 0.02. Further, it has been revealed that the noise-absorbing effect gradually diminishes when (A × N) is > 0.06.

### REFERENCE SIGNS LIST

1, 101 Pneumatic tire
2 Carcass
3 Inclined belt layer
4 Belt reinforcing layer
5 Tread
6 Sidewall portion
7 Bead portion
7a Bead toe
8 Inner surface of tire
9 Bead filler
9a Upper end (Tire radial direction outermost end) of bead filler
11 Short fiber
11a Boundary, in a tire cross section in the width direction, of a region where the short fibers have been fixedly attached
CL: Tire equatorial plane

## Claims

1. A pneumatic tire, having short fibers fixedly attached to at least a portion of an inner surface thereof, **CHARACTERISED BY**:
provided that the average cross sectional area of a cross section, not in contact with the inner surface of the tire, of one short fiber is "A" (mm²/the number of short fibers) and the number of the short fibers fixedly attached in a unit area (1 mm²), of a region where the short fibers have been fixedly attached, in the inner surface of the tire is "N" (the number of short fibers/mm²),
wherein "A" is a fixed value, with the average diameter of the short fibers being a value in the range of 1 µm to 35 µm;
"N", which is homogeneously the same value across the region where the short fibers have been fixedly attached, is a fixed value selected such that the product A x N of the fixed value "A" with the fixed value "N", is a value in the range of 0.02 to 0.06.

2. The pneumatic tire of claim 1, wherein the average length of the short fibers is in the range of 0.5 mm to 10 mm.

## Patentansprüche

1. Luftreifen, der kurze Fasern umfasst, die an wenigstens einem Abschnitt einer Innenfläche desselben befestigt sind, **dadurch gekennzeichnet, dass**:
vorausgesetzt, dass die durchschnittliche Querschnittsoberfläche eines Querschnitts, nicht in Berührung mit der Innenfläche des Reifens, einer kurzen Faser "A" (mm²/die Anzahl von kurzen Fasern) ist und die Anzahl der kurzen Fasern, die fest befestigt sind in einer Flächeneinheit (1 mm²) eines Bereichs, wo die kurzen Fasern fest befestigt worden sind, in der Innenfläche des Reifens "N" (die Anzahl von kurzen Fasern/mm²) ist,
wobei "A" ein Festwert ist, wobei der durchschnittliche Durchmesser der kurzen Fasern ein Wert in dem Bereich von 1 µm bis 35 µm ist,
"N", das homogen der gleiche Wert über den Bereich ist, wo die kurzen Fasern fest befestigt worden sind, ein Festwert ist, der derart gewählt ist, dass das Produkt A x N des Festwerts "A" mit dem Festwert "N" ein Wert in dem Bereich von 0,02 bis 0,06 ist.

2. Luftreifen nach Anspruch 1, wobei die durchschnittliche Länge der kurzen Fasern in dem Bereich von 0,5 mm bis 10 mm liegt.

## Revendications

1. Bandage pneumatique, comportant des fibres courtes fixées fermement sur au moins une partie de sa surface interne, **caractérisé en ce que** :
à condition que la surface de section transversale moyenne d'une section transversale, non en contact avec la surface interne du bandage pneumatique, d'une fibre courte corresponde à « A » (mm²/nombre de fibres courtes), le nombre de fibres courtes fermement fixées dans une unité de surface (1 mm²) d'une région où les fibres courtes ont été fermement fixées, dans la surface interne du bandage pneumatique, correspondant à « N » (le nombre de fibres courtes/mm²) ;
où « A » représente une valeur fixe, le diamètre moyen des fibres courtes étant une valeur comprise dans l'intervalle allant de 1µm à 35 µm ;
« N », constituant de manière homogène la même valeur à travers la région où les fibres courtes ont été fermement fixées, représente une valeur fixe sélectionnée de sorte que le produit de A x N de la valeur fixe « A » par la valeur fixe « N », est une valeur comprise dans l'intervalle allant de 0,02 à 0,06.

2. Bandage pneumatique selon la revendication 1, dans lequel la longueur moyenne des fibres courtes est comprise dans l'intervalle allant de 0,5 mm à 10 mm.
